# EUROPEAN PATENT APPLICATION

(11) **EP 3 722 587 A1**
(43) Date of publication of application: **14.10.2020**
(21) Application number: 19382279.8
(22) Date of filing: 12.04.2019
(51) Int. Cl.: F02M 26/15, F02M 26/25, F02M 26/12, F02M 26/71, F02G 5/02

(54) **EXHAUST GAS MANAGEMENT SYSTEM**

(71) Applicant: BORGWARNER EMISSIONS SYSTEMS SPAIN, S.L.U., 36315 Vigo Pontevedra (ES)
(72) Inventor: GONZÁLEZ TABARÉS, Iago, E-36202 Vigo, Pontevedra (ES); PÉREZ MAURICIO, Xurxo, E-36206 Vigo, Pontevedra (ES); HERMIDA DOMÍNGUEZ, Xoan Xosé, E-36380 Gondomar, Pontevedra (ES)
(74) Representative: ABG Intellectual Property Law, S.L.

(57) **Abstract**

The present invention relates to an exhaust gas management system which allows cooled exhaust gas recirculation as well as heat recovery through a single integrated module, located downstream of the exhaust line. Additionally, the present invention relates to a propulsion system wherein the cooled exhaust gas is recirculated to the intake manifold of an internal combustion engine.

## Description

### Object of the Invention

The present invention relates to an exhaust gas management system which allows cooled exhaust gas recirculation as well as heat recovery through a single integrated module, located downstream of the exhaust line.

Additionally, the present invention relates to a propulsion system wherein the cooled exhaust gas is recirculated to the intake manifold of an internal combustion engine.

### Background of the Invention

Naturally aspirated propulsion systems by means of an internal combustion engine which comprise the functions of cooled exhaust gas recirculation as well as heat recovery are known today. This is achieved for example by means of corresponding heat exchangers for each of these functions.

In particular, one of said heat exchangers allows the cooling of the exhaust gas and the subsequent recirculation thereof to the intake manifold of the engine. Said heat exchanger, or EGR (Exhaust Gas Recirculation) exchanger, is located close to the naturally aspirated engine, with a recirculation valve, or EGR valve, being placed between said EGR exchanger and the intake manifold of the naturally aspirated engine.

The close positioning of the EGR exchanger to the intake manifold of the engine is due to the fact that introducing gas back into the intake manifold requires overpressure in the recirculated gas so that it can overcome the pressure drop occurring in the EGR heat exchanger and furthermore establish an inflow rate which can be controlled by means of the EGR valve for the suitable mixing thereof with the air coming from the atmosphere.

Additionally, there is a heat exchanger close to the exhaust in which the non-recirculated exhaust gas is cooled such that heat is recovered from this gas before it is expelled into the atmosphere. The recovered heat has various applications, such as increasing the temperature of the vehicle passenger compartment or increasing the temperature of the engine after startup so that the engine can reach its nominal temperature as soon as possible.

In this case, the heat exchanger works as a heat recovery unit and must cause the lowest pressure drop so as not to increase exhaust pressure, which would reduce engine performance. In this case, the cooled gas which has already transferred its heat is finally discharged into the atmosphere.

The term "exhaust line" will be used throughout the description and must be interpreted as the set of elements which allow driving the exhaust gas from the exhaust manifold of the internal combustion engine into the atmosphere. In vehicles which incorporate an internal combustion engine, said engine is located in the front part of the vehicle and the discharging of the exhaust gas takes place in the rear part of the vehicle. The exhaust line therefore extends from the front position where the internal combustion engine is located to the rear part. The main element of the exhaust line is the exhaust duct.

Of all the elements in the exhaust line, some are close to the engine and therefore close to an end of the exhaust line, such as particle filters and or catalytic converters, and others are at the opposite end, such as mufflers and resonators. The latter will be considered elements with very small pressure drops and are at a pressure close to atmospheric pressure. The attachment between the ends or between the elements close to one end and the elements close to the opposite end is usually established with an exhaust duct which extends along the length of the vehicle and uses deformable intermediate elements to achieve a suitable attachment at the ends for uncoupling the vibratory movement of the engine from the remaining components located on the other side of the deformable element.

There is an interest in the heat recovery unit being located downstream of the exhaust line because space is very limited in the engine compartment.

The integration of both functions through a single heat exchanger working both as an EGR exchanger and a heat recovery unit is known. This strategy corresponds to one of the most highly developed fields of the art given that it allows reducing the elements present in the propulsion system as it dispenses with one of the heat exchangers.

Nevertheless, this single exchanger working as an EGR exchanger and a heat recovery unit must operate under suitable conditions to perform both functions; in particular, it must be located at a point of the exhaust line where the pressure is high enough to allow feeding the recirculated gas into the intake manifold.

A similar integration of functions through a single heat exchanger is known in internal combustion engines which incorporate a turbocharger. With this configuration, the exchanger allows combining both functions given that the turbocharger assures at all times sufficient recirculated gas and air mixture pressure for the air to enter through the intake manifold. In this case, the valve managing the recirculated gas must be located away from the intake manifold and before the turbocharger.

However, given that the behavior of an internal combustion engine with a turbocharger is not like that of a naturally aspirated engine, this solution is not valid.

Therefore, the solutions known in the state of the art do not allow for a correct integration of functions in the case of the naturally aspirated engines or require a positioning of the heat exchanger in the exhaust line where high thermal fatigue occurs.

### Description of the Invention

Based on the problems set forth above, the present invention proposes a solution which allows suitable integration of the functions of cooled exhaust gas recirculation as well as heat recovery from said exhaust gas, preventing element duplication, which increases both the weight of the system and the space needed in the vehicle for installing said system for naturally aspirated gasoline internal combustion engines, solving the problems considered above.

A first inventive aspect relates to an *exhaust gas management system* which, despite the technical issues considered above, establishes a configuration comprising:
- *an exhaust duct comprising:*
   *a first end connectable to an exhaust manifold of an internal combustion engine,*
   *a second end open to the atmosphere;*
- *a heat recovery module comprising:*
   *a heat exchanger in bypass configuration with the exhaust duct, wherein the heat exchanger has a first inlet*/*outlet port and a second inlet*/*outlet port wherein the first port is the port closest to the first end of the exhaust duct and the second port is the port closest to the second end of the exhaust duct;*
   *a bypass valve with at least two end positions, a first end position which establishes the passage of the exhaust gas through the heat exchanger, and a second end position which establishes the passage of the gas through the exhaust duct.*

As indicated, the exhaust duct is the main element of the exhaust line, and when it is installed in a drive device comprising the internal combustion engine, transports the exhaust gas from the internal combustion engine to the atmosphere in the operating mode.

According to the embodiments, the exhaust duct may comprise other elements intercalated therein, such as particle filters or mufflers, giving rise to the exhaust line.

The heat recovery module has a heat exchanger, the heat exchanger having a first function of cooling the gas which is recirculated to the intake manifold of the internal combustion engine, and as a heat recovery unit, removing heat from the exhaust gas before it is discharged into the atmosphere. The bypass configuration allows making temporary use of the heat exchanger such that the gas can be discharged directly into the atmosphere without passing through the exchanger.

In this bypass configuration, the heat exchanger is arranged in a parallel configuration with respect to a segment of the exhaust duct and connected thereto by means of a first port and a second port, respectively. In the preferred embodiments of the invention, the first port and the second port are configured by means of a manifold, either an intake manifold or an exhaust manifold. Likewise, it is possible for other intermediate elements to be arranged in the connections between essential elements.

Throughout the description, the first port will be identified as the port closest to the first end of the exhaust duct and the second port as the port closest to the second end of the exhaust duct.

Embodiments will be described in which, according to the position of the bypass valve, the first port will be the inlet port into the heat exchanger, with the second port being the outlet port, and other embodiments will be described in which the direction of circulation in the heat exchanger changes, where the first port is the outlet port and the second port is the inlet port.

According to embodiments of the invention, the partial opening of the bypass valve allows regulating the flow which is diverted to the heat exchanger and also the overpressure it may generate in the exhaust line with respect to atmospheric pressure.

Additionally, the invention is characterized in that the *heat recovery module is adjacent to the second end of the exhaust duct, and in that said management system comprises:*
- *a recirculated exhaust gas recirculation duct, connectable to an air intake manifold of the internal combustion engine, wherein, in the operating mode, the recirculation duct* establishes a fluid communication between *an outlet of the heat exchanger of the heat recovery module and the air intake manifold,*
- *a valve for regulating the recirculated gas flow which in the operating mode passes through the recirculation duct located adjacent to the air intake manifold.*

At the beginning of the description, the two ends of the exhaust duct have been identified, the end corresponding to the start of the exhaust line, fed by the exhaust manifold of the internal combustion engine, where pressure is maximum, and the terminal end of the exhaust line, intended for discharging the exhaust gas into the atmosphere, where pressure is close to atmospheric pressure.

Likewise, it has been established that the second end of the exhaust duct can have components such as a muffler and/or a resonator considering that the pressure drop in these two components is a very small, negligible with respect to other components which may be located in the exhaust line. Therefore, in the context of the invention, the condition of being located adjacent to the second end of the exhaust duct implies being close to the end where the exhaust gas is discharged into the atmosphere, under pressure conditions close to atmospheric pressure, but there may be elements such as a muffler and a resonator between said point adjacent to the end and the exit of the gas into the atmosphere; that is, the muffler and resonator, if they are present, would be positioned downstream of the heat exchanger.

Against the technical prejudices identified when describing the state of the art, the invention places the exchanger, one of the functions of which is to cool the recirculated gas going into the intake manifold of the internal combustion engine, adjacent to the end of the exhaust duct where pressure is close to atmospheric pressure.

Pressure close to atmospheric pressure is understood as being in a range between atmospheric pressure and 5% above atmospheric pressure.

The exchanger located at this point has very low pressure, close to atmospheric pressure where, against all expectations, it has been verified by means of experiments that it is capable of feeding EGR gas to a naturally aspirated gasoline engine under operating conditions.

The valve for regulating the gas flow allows controlling the recirculated gas entering through the intake of the engine to be mixed with air. According to various embodiments which will be described below, the valve can be found in specific locations which increase the speed of response of the engine.

A second aspect of the invention is *a propulsion system comprising:*
- *a naturally aspirated gasoline internal combustion engine wherein said engine comprises:*
   *an air intake manifold, and*
   *an exhaust manifold;*
- *an exhaust gas management system according to any of the embodiments according to the first inventive aspect,*
   *wherein:*
   - *the exhaust gas recirculation duct is connected to the intake manifold, and*
   - *the first end of the exhaust duct is connected to the exhaust manifold.*

That is, the propulsion system comprises the naturally aspirated gasoline engine in which there has been incorporated the exhaust gas management system which allows the recirculated gas feed and heat recovery as described.

### Description of the Drawings

These and other features and advantages of the invention will become more apparent based on the following detailed description of a preferred embodiment, given solely by way of non-limiting illustrative example, in reference to the attached drawings.
Figure 1 schematically shows an exhaust gas management system like those known in the state of the art.
Figure 2 schematically shows a first embodiment of the invention in which the bypass valve is located on the side of the second port of the heat exchanger.
Figure 3 schematically shows a second embodiment of the invention in which the valve for regulating the recirculated gas flow is located in an area very close to the feed of the cylinders of the internal combustion engine integrating the valve in the engine block.
Figures 4A and 4B schematically show a front view and top view, respectively, of an embodiment of the valve for regulating the recirculated gas flow according to the embodiment shown in the preceding figure.
Figure 5 schematically shows a third embodiment of the invention in which the bypass valve is located on the side of the first port of the heat exchanger.
Figure 6 schematically shows a fourth embodiment of the invention in which the recirculation duct and the valve for regulating the recirculated gas flow comprise two coupling interfaces which allow for an easier installation given the magnitude of the system.

### Detailed Description of the Invention

According to the first inventive aspect, the present invention relates to an exhaust gas management system which allows recirculating suitably cooled exhaust gas, specifically in a naturally aspirated gasoline engine; and recovering heat from the exhaust gas which would otherwise end up being discharged into the atmosphere.

According to the first inventive aspect, it has been verified that the use of feed means with EGR gas in a gasoline engine has shown various advantages:
- When the engine is working in low-load operation, the throttle of the air intake valve must be closed to allow entry of the air strictly necessary for assuring a stoichiometric mixture. Nevertheless, the closure of this throttle causes a negative pressure and therefore a pressure drop, reducing the volumetric efficiency of the engine. By incorporating EGR gas, the air intake valve must increase its opening, increasing the volumetric efficiency and therefore bringing the operating conditions of the engine close to its optimal conditions.
- It has been observed that the heating capacity of the mixture of fuel with air and the recirculated exhaust gas is maximized once conditions such that the tendency to self-detonate is reduced have been assured, and
- The excess potential of fuel above the air-to-fuel ratio normally used in these engines is eliminated, thereby cooling the exhaust gas since it may damage an exhaust component.

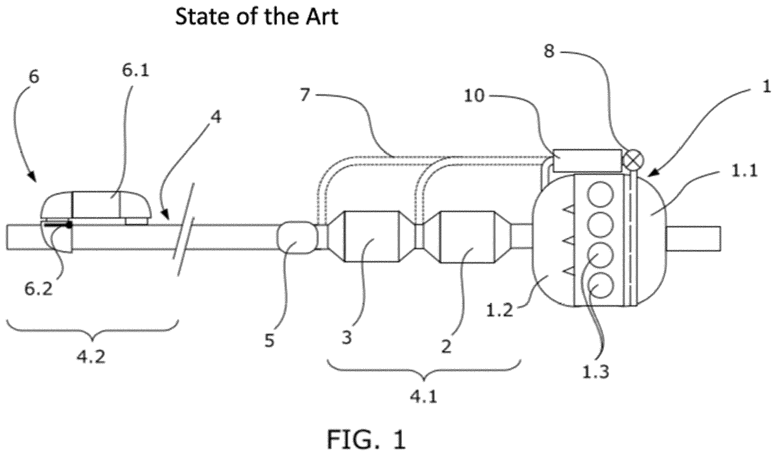

Figure 1 shows an embodiment of an exhaust management system according to the state of the art. The figure schematically shows an internal combustion engine (1) comprising at least one intake manifold (1.1) for the entry of air into combustion chambers (1.3), and an exhaust manifold (1.2) through which hot gases from the combustion chambers (1.3) exit.

The hot gas without oxygen, or with minimum traces of oxygen, is finally expelled into the atmosphere through the exhaust line. The exhaust line comprises an exhaust duct (4) which at a first end (4.1) has a first group (2, 3) of gas treatment elements such as a particle filter (2) or a catalytic converter (3).

This first group of elements (2, 3) is close to the internal combustion engine (1) and therefore is at a high pressure, which pressure lessens the farther the group is from the exhaust manifold (1.2).

Two options are shown by means of discontinuous lines wherein a recirculation duct (7) takes part of the exhaust gas, at a high temperature and with a pressure greater than atmospheric pressure, and drives it to the air intake manifold (1.1) after reducing its temperature with a heat exchanger (10) for EGR gas.

The high pressure at the points of the exhaust line located around this first group of elements (2, 3) allows the recirculated gas going through the recirculation duct (7) to be introduced back into the intake with a given flow using a valve (8), the valve for regulating the recirculated gas.

The rest of the gas that is not recirculated continues its path along the exhaust line through the exhaust duct (4) until reaching the second end (4.2) open to the atmosphere, where the pressure is atmospheric pressure.

After the first group (2, 3) of elements of the exhaust line, Figure 1 shows a first deformable element (5) which establishes a certain degree of independence in movements between the first group of elements (2, 3) together with the internal combustion engine (1) and the rest of the exhaust line, preventing for example the vibrations of the engine from being transmitted for the most part to the rest of the elements of the exhaust line located downstream. In particular, it prevents the transmission of vibrations to the long segment of the exhaust duct (4) passing below the vehicle which incorporates the internal combustion engine (1) as well as the exhaust management system such as the one described, reaching the second end (4.2) open to the atmosphere.

The same figure shows at one end of the exhaust line a heat recovery module (6) formed by a heat exchanger (6.1) in bypass configuration with the exhaust duct (4) and a bypass valve (6.2).

The bypass valve (6.2) has at least two end positions, a first end position which establishes the passage of the exhaust gas through the heat exchanger (6.1), and a second end position which establishes the passage of the gas through the exhaust duct (4).

In the first end position, the heat from the exhaust gas is transferred to a thermal fluid, typically a liquid coolant, for use in applications such as increasing the temperature at the start in an internal combustion engine so that it can reach the nominal temperature as soon as possible, heating the passenger compartment, or being used as a heat source for a Rankine cycle.

This heat recovery unit module (6) is independent of the EGR heat exchanger (10) and has no influence whatsoever on the pressure in the intake manifold (1.1) of the internal combustion engine (1).

### First embodiment of the invention

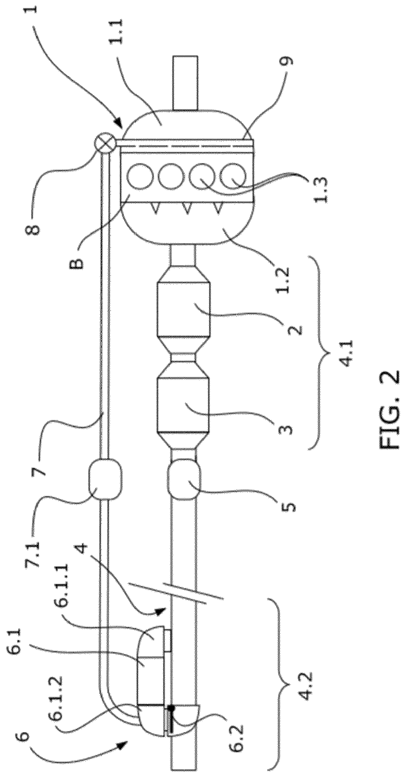

Figure 2 shows a first embodiment of the invention in which the specific heat exchanger (10) for EGR gas which was located right at the inlet of the intake manifold (1.1) is dispensed with and the exchanger of the recovery module (6) is established as a heat exchanger both for recovering heat and for cooling recirculated EGR gas. The rest of the elements in common with Figure 1 are considered to have been described when the system according to the state of the art was described.

For this purpose, the outlet of the exchanger is established in the second port (6.1.2) and is communicated with the valve (8) for regulating the recirculated gas flow by means of a recirculation duct (7).

Although this heat recovery module (6) is located adjacent to the second end (4.2) of the exhaust duct (4) with a pressure close to atmospheric pressure, it has surprisingly been verified that in naturally aspirated gasoline engines, when the valve (8) for regulating the recirculated gas flow opens it has been observed that the gas flows at a sufficient flow with respect to the established target.

In the configuration shown in Figure 2, the bypass valve (6.2) is located downstream according to the direction of flow in the exhaust duct (4), that is, on the cold side of the heat exchanger (6.1) which corresponds with the second port (6.1.2) in this embodiment.

When the bypass valve (6.2) is as shown in Figure 2, in the second end position, the exhaust gas can pass directly through the exhaust duct (4) to the atmosphere. Nevertheless, part of the exhaust gas may enter through the inlet of the exchanger located in the first port (6.1.1), pass through the exchanger (6.1), transferring heat and reducing its temperature, and exit at the opposite end through the second port (6.1.2) of the heat exchanger (6.1) to continue through the recirculation duct (7) to the valve (8) for regulating the recirculated gas flow, entering the air intake manifold (1.1). In this embodiment, the inlet of the exchanger (6.1) through the first port (6.1.1) is at the end closest to the internal combustion engine (1) and the outlet of the exchanger (6.1) through the second port (6.1.2) is at the end closest to the outlet into the atmosphere according to the direction of the exhaust duct (4).

In this embodiment and in all the embodiments that are described below, the first port (6.1.1) of the heat exchanger (6.1) is a manifold and the second port (6.1.2) of the heat exchanger (6.1) is also a manifold.

When the bypass valve (6.2) is in the first end position, which would be represented with a vertical orientation according to Figure 2, the exhaust gas cannot pass through the exhaust duct (4) in the segment arranged parallel to the heat exchanger (6.1) and must necessary cross said heat exchanger (6.1). After transferring heat, reducing its temperature upon passing through the heat exchanger (6.1), the gas:
- either returns to the exhaust duct (4) to be discharged into the atmosphere, or
- part of the gas is driven through the recirculation duct (7) to enter the intake manifold (1.1) of the internal combustion engine (1).

The purpose of the first option is to recover the heat which would otherwise end up being wasted in the atmosphere and the second option allows introducing the exhaust gas with a lower temperature at the intake, obtaining the already described characteristic benefits of an EGR system.

This same drawing schematically shows a distribution rail (9) in the air intake manifold (1.1) which allows distributing the air and recirculated gas mixture directly to the inlet of each combustion chamber (1.3), increasing feed condition homogeneity for all of them.

According to another embodiment, the recirculation duct (7) comprises a second deformable element (7.1) which also allows making movements between the ends of said recirculation duct (7) independent, for example movements due to expansions of such a long element connected with fixed attachments to devices located at its two ends or for decoupling the vibrations of the engine with respect to the components located at the second end (4.2) of the exhaust duct (4).

The specific solution of the use of a distribution rail (9), the specific solution of the use of a second deformable element (7.1), or both specific solutions simultaneously are applicable to any of the embodiments described herein.

In particular, according to other embodiments the first deformable element (5), the second deformable element (7.1), or both are elastic.

According to other embodiments, the first deformable element (5), the second deformable element (7.1), or both are configured like a bellows.

### Second embodiment of the invention

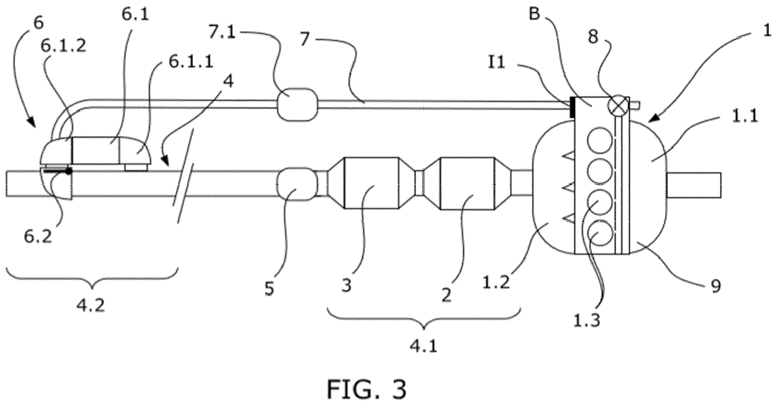

Figure 3 schematically shows a second embodiment in which most the elements have already been described in the first embodiment, whereby only those different elements with respect to the first embodiment will be described below.

In this embodiment, the valve (8) for regulating the recirculated gas flow or EGR gas has been installed integrated in the engine block (B) such that the manufacture of certain parts is avoided given that some surfaces of the valve (8) are formed by said engine block (B), and most importantly the valve (8) is located even closer to the combustion chambers (1.3), drastically reducing response inertia when recirculated gas is to be fed to the intake of the internal combustion engine (1).

Said Figure 3 also shows a first attachment interface (I1) which allows the attachment between the recirculation duct (7) and the engine block (B) such that the recirculation duct (7) and the valve (8) for regulating the recirculated gas flow which is integrated in said engine block (B) are placed in fluid communication.

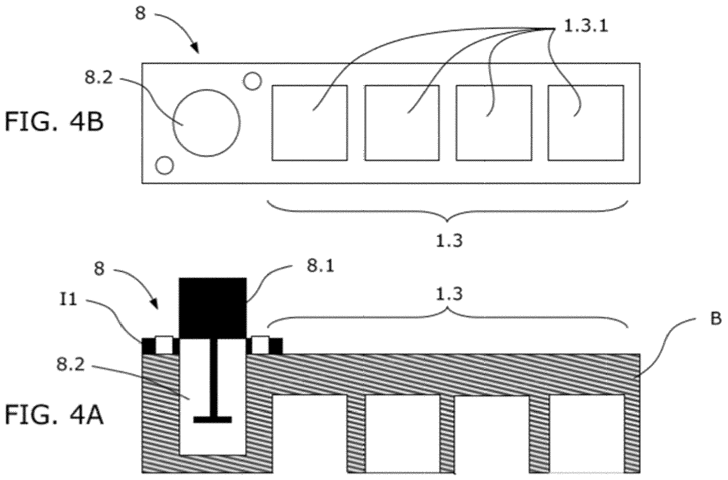

Figure 4A and 4B schematically show a front view and top view, respectively, of an embodiment of the valve (8) according to the example shown in the preceding figure. Figure 4A shows a section view of the engine block (B) with a housing (8.2) in which the valve (8) which is fixed on the upper surface of the engine block (B) is housed. The housing (8.2) is thereby formed on the very engine block (B) without having to manufacture specific parts, and an actuator (8.1), the actuator (8.1) of the valve (8), together with the closure elements, are fixed to the engine block (B).

Figure 4B schematically shows the inlet (1.3.1) into the combustion chambers (1.3) very close to the valve (8) for regulating the recirculated gas flow, which means that with lower pressures in the recirculated gas the flow is increased.

### Third embodiment of the invention

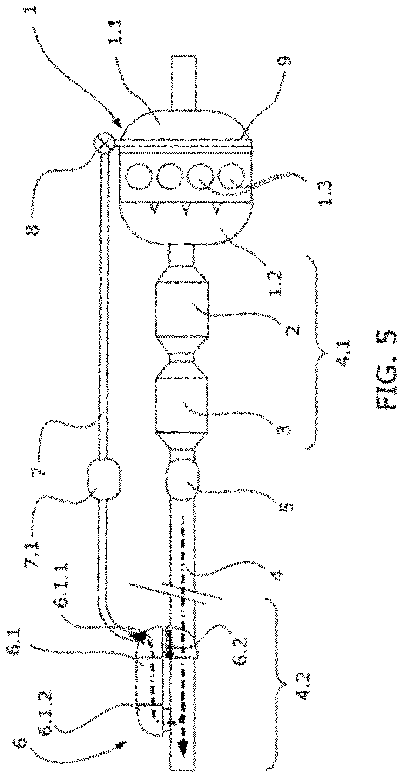

Figure 5 schematically shows a third embodiment of the invention in which the bypass valve (6.2) is located upstream the heat recovery module (6) following the direction of flow of the exhaust gas along the exhaust duct (4), that is, on the side where the first port (6.1.1) is located. Additionally, the end of the heat exchanger (6.1) connected to the recirculation duct (7) is now upstream of the module (6). The connection is established in the first port (6.1.1).

In Figure 5, the bypass valve (6.2) is depicted in the second position, which establishes the passage of the gas through the exhaust duct (4) where the hot gas circulating through the exhaust duct (4) continues until the second end (4.2) of the exhaust duct (4) with free access to the atmosphere. In this position of the flap of the bypass valve (6.2), there is no heat recovery save a small unwanted recovery value through the access of the hot gas into the tube bundle of the heat exchanger. Nevertheless, the recirculated gas inlet passing through the heat exchanger (6.1) in the upstream direction is available, following the same references with respect to the direction of flow in the exhaust duct (4), that is entering through the second port (6.1.2). The flow of the recirculated gas is shown using an arrow with a discontinuous thick line.

In the first end position, not shown in Figure 5, the bypass valve (6.2) is positioned in a transverse manner, closing the passage through the exhaust duct (4) in the bypass configuration and is forced to pass through the heat exchanger (6.1), this time in the downstream direction according to the direction of the exhaust duct (4), to be incorporated again into said exhaust duct (4) and finally be discharged into the atmosphere. That is, in this case the exhaust gas enters through the first port (6.1.1) into the heat exchanger (6.1) and exits through the second port (6.1.2).

In this first end position of the bypass valve (6.2), the direction of flow inside the heat exchanger (6.1) is opposite the direction of flow when the bypass valve (6.2) is in the second end position. In said first end position of the bypass valve (6.2), the heat recovery module (6) operates by recovering heat from the exhaust gas.

This configuration is applicable to all the preceding examples which described specific aspects of the deformable elements (5, 7.1), position of the EGR valve (8) for regulating the recirculated gas flow, and the use of the distribution rail (9) for feeding the combustion chambers (1.3).

### Fourth embodiment of the invention

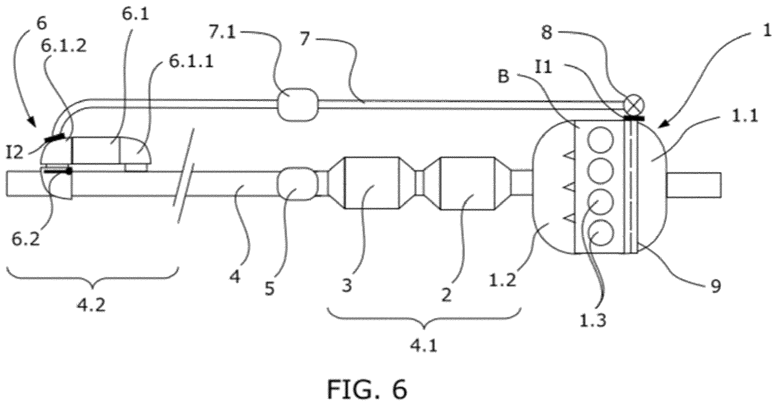

Figure 6 schematically shows a fourth embodiment of the invention in which the recirculation duct (7) and the valve (8) for regulating the recirculated gas flow comprise two coupling interfaces.

A first interface (I1) allows the attachment of the valve (8) for regulating the recirculated gas flow to either the engine block (B), which is the option explicitly shown in Figure 6, or the intake manifold.

A second interface (12) allows the attachment of the recirculation duct (7) to the heat exchanger (6.1) of the heat recovery module (6).

According to this embodiment, easy installation of the assembly formed by the recirculation duct (7) and the valve (8) for regulating the recirculated gas flow with the rest of the exhaust gas management system is possible.

According to preferred embodiments of the invention, any of the described examples uses parallel exhaust gas paths through the heat exchanger (6.1) and the exhaust duct (4).

All the embodiments show the exhaust gas management system attached to an internal combustion engine, specifically a naturally aspirated gasoline engine. A second aspect of the invention relates to any of the propulsion systems combining both the internal combustion engine (1) and the exhaust gas management system like those described, as well as the vehicle incorporating such propulsion system.

## Claims

1. An exhaust gas management system comprising:
- an exhaust duct (4) comprising:
a first end (4.1) connectable to an exhaust manifold (1.2) of an internal combustion engine (1),
a second end (4.2) open to the atmosphere;
- a heat recovery module (6) comprising:
a heat exchanger (6.1) in bypass configuration with the exhaust duct (4), wherein the heat exchanger (6.1) has a first inlet/outlet port (6.1.1) and a second outlet/inlet port (6.1.2) wherein the first port (6.1.1) is the port closest to the first end (4.1) of the exhaust duct (4) and the second port (6.1.2) is the port closest to the second end (4.2) of the exhaust duct (4);
a bypass valve (6.2) with at least two end positions, a first end position which establishes the passage of the exhaust gas through the heat exchanger (6.1), and a second end position which establishes the passage of the gas through the exhaust duct (4);
**characterized in that** the heat recovery module (6) is adjacent to the second end (4.2) of the exhaust duct (4), and **in that** said management system comprises:
- a recirculated exhaust gas recirculation duct (7), connectable to an air intake manifold (1.1) of the internal combustion engine (1),
wherein, in the operating mode, the recirculation duct (7) establishes a fluid communication between an outlet (6.1.1, 6.1.2) of the heat exchanger (6.1) of the heat recovery module (6) and the air intake manifold (1.1),
- a valve (8) for regulating the recirculated gas flow which in the operating mode passes through the recirculation duct (7) located adjacent to the air intake manifold (1.1).

2. The exhaust gas management system according to claim 1, wherein the system further comprises at least one exhaust gas post-treatment unit (2, 3) in the exhaust duct (4), located between a first end (4.1) of said exhaust duct (4) and the heat recovery module (6).

3. The exhaust gas management system according to the preceding claim, wherein the system further comprises a first deformable element (5) in the exhaust duct (4), located between the at least one exhaust gas post-treatment unit (2, 3) and the heat recovery module (6).

4. The exhaust gas management system according to any of the preceding claims, wherein the recirculation duct (7) comprises a second deformable element (7.1).

5. The exhaust gas management system according to any of the preceding claims, wherein the paths of the exhaust gas through the heat exchanger (6.1) and the exhaust duct (4) are parallel.

6. The exhaust gas management system according to any of claims 1 to 5, wherein the bypass valve (6.2) is located on the side of the first port (6.1.1) of the heat exchanger (6.1).

7. The exhaust gas management system according to any of claims 1 to 5, wherein the bypass valve (6.2) is located on the side of the second port (6.1.2) of the heat exchanger (6.1).

8. The exhaust gas management system according to any of the preceding claims, wherein either the recirculation duct (7) or the recirculated gas flow management valve (8) has a first attachment interface (I1) configured for being coupled to either an engine block (B) or to an air intake manifold (1.1) of an engine block (B).

9. The exhaust gas management system according to any of the preceding claims, wherein the recirculation duct (7) comprises a second attachment interface (12) for attachment to the heat recovery module (6).

10. The system according to any of the preceding claims, wherein the recirculation duct (7) is connected to the valve (8) by means of a screwed attachment.

11. A propulsion system comprising:
- a naturally aspirated gasoline internal combustion engine (1) wherein said engine comprises:
an air intake manifold (1.1); and
an exhaust manifold (1.2);
- an exhaust gas management system according to any of claims 1 to 10,
wherein:
- the exhaust gas recirculation duct (7) is connected to the intake manifold (1.1), and
- the first end (4.1) of the exhaust duct (4) is connected to the exhaust manifold (1.2).

12. The system according to claim 11, wherein the internal combustion engine (1) comprises an engine block (B) for housing one or more combustion chambers (1.3), and the valve (8) for regulating the recirculated exhaust gas flow is integrated in the engine block (B).

13. The system according to claim 11, wherein the valve (8) for regulating the recirculated exhaust gas flow is integrated in the air intake manifold (1.1).

14. The system according to any of claims 11 to 13, wherein the entry of recirculated exhaust gas into the air intake manifold (1.1) of the internal combustion engine (1) is by means of a distribution rail (9) for individually and homogeneously feeding each of the combustion chambers (1.3) of the internal combustion engine (1).
